# FASCICULE DE BREVET EUROPEEN

(11) **EP 1 510 913 B1**
(45) Date de publication et mention de la délivrance du brevet: **05.01.2011**
(21) Numéro de dépôt: 04104129.4
(22) Date de dépôt: 27.08.2004
(51) Int. Cl.: G06F 7/58

(54) **Normalisation d'une source de bruit pour génération de nombres aléatoires**
Normierung einer Rauschquelle zur Erzeugung von Zufallszahlen
Normalization of a noise source for the generation of random numbers

(30) Priorité: 28.08.2003 FR 0350466
(43) Date de publication de la demande: 02.03.2005
(73) Titulaire: ST MICROELECTRONICS S.A., 92120 Montrouge (FR)
(72) Inventeur: Liardet, Pierre-Yvan, 13790 Peynier (FR); Teglia, Yannick, 13011 Marseille (FR); Tomei, Ambroise, 13100 Aix en Provence (FR)
(74) Mandataire: de Beaumont, Michel

(56) Documents cités:
- US-A- 5 692 102
- US-B1- 6 477 481

## Description

La présente invention concerne le domaine des générateurs de nombres aléatoires et plus précisément les générateurs de nombres aléatoires sous la forme de flux de bits issus d'une ou plusieurs sources de bruit, numériques ou numérisées.

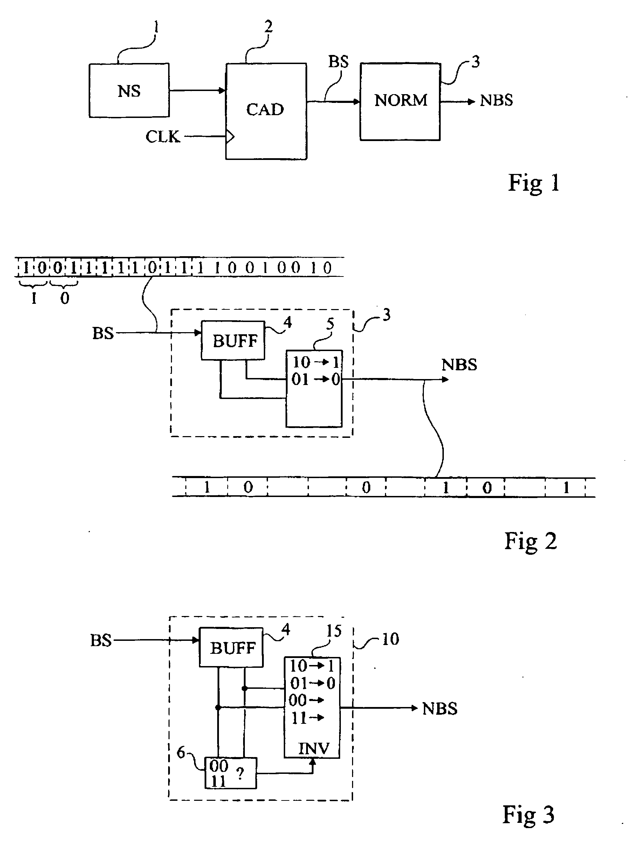

La figure 1 représente, de façon très schématique et sous forme de blocs, un exemple de générateur d'un flux de bits du type auquel s'applique la présente invention.

Un tel générateur est basé sur l'utilisation d'une source de bruit 1 (NS) fournissant un bruit analogique à un élément 2 de conversion analogique-numérique (CAD) cadencé par une horloge CLK et fournissant un flux de bits BS. La source 1 est, par exemple, constituée d'un ou plusieurs oscillateurs dont les sorties sont sommées pour fournir un bruit analogique en entrée du convertisseur 2. Le convertisseur 2 peut, de façon simplifiée, être un comparateur associé à une bascule.

La qualité d'un générateur aléatoire ou plus généralement d'une source de bruit se mesure par la qualité de son aléa, c'est-à-dire l'équiprobabilité qu'a le flux BS à fournir n'importe quel nombre et, en particulier, l'équiprobabilité de trouver dans le flux des 0 et des 1.

En pratique, le flux BS fourni par le convertisseur 2 a des risques de ne pas avoir une répartition équiprobable de ses éléments (bits ou mots de bits). En particulier, la source de bruit 1 utilise généralement des oscillateurs pour lesquels il existe un risque de synchronisation entre eux ou avec l'horloge CLK. En cas de synchronisation, l'état fourni en sortie (flux BS) reste constant.

Pour améliorer le caractère équiprobable d'un flux de bits censé être aléatoire, le flux BS traverse un circuit 3 de normalisation (NORM) fournissant un train de bit NBS modifié et dont le caractère équiprobable des zéros et des uns dans le flux est amélioré.

La figure 2 représente un exemple classique de circuit 3 de normalisation d'un flux de bit BS appliquant une méthode dite de Von Neumann. Un tel circuit 3 est basé sur une analyse du flux de bits entrant BS, par paires de bits. On utilise alors un élément de mémorisation 4 (BUFF) permettant de traiter les bits, par paires, dans un circuit 5 de détermination d'état qui fournit le flux de bits normalisé NBS. D'après la méthode de Von Neumann, si la paire de bits est 10, on génère un état 1. Si la paire de bits est 01, on génère un état 0. Si la paire de bits est 00 ou 11, on l'ignore, c'est-à-dire qu'aucun état n'est généré en sortie.

Un inconvénient de la méthode de Von Neumann est que le débit du flux de bit normalisé NBS n'est pas constant, c'est-à-dire que la période avec lesquels les bits sont fournis n'est pas régulière. Dans un circuit de Von Neumann simple tel que décrit ci-dessus, le débit de bits du flux NBS varie entre deux et quatre fois moins par rapport au débit du flux d'entrée BS.

La présente invention vise à proposer une normalisation d'une source de bruit fournissant un flux de bits numérique qui améliore les solutions connues de Von Neumann.

L'invention vise plus particulièrement à rendre le débit de sortie de l'élément de normalisation constant.

L'invention vise également à accroître le débit par rapport à une normalisation de type Von Neumann.

Pour atteindre ces objets ainsi que d'autres, l'invention prévoit un procédé de normalisation d'une source de bruit fournissant un flux de bits initial, consistant :
à découper le flux de bits initial en mots de bits de longueur identique ; et
à attribuer un état de sortie en fonction des états des bits du mot courant et d'une règle d'attribution préétablie, la règle d'attribution se trouvant inversée en fonction de l'apparition, dans le flux de bit initial, de mots dont tous les bits ont des états identiques.

Selon un mode de mise en oeuvre de la présente invention, la règle d'attribution des bits en sortie est inversée à chaque apparition d'un mot de bits d'états identiques dans le flux initial.

Selon un mode de mise en oeuvre de la présente invention, l'inversion des états fournis en sortie est conditionnée par une combinaison de bits détectant l'apparition de mots de bits d'états identiques de chaque type, respectivement.

Selon un mode de mise en oeuvre de la présente invention, le bit affecté à un mot de bits d'états identiques dans le flux initial dépend de l'état de sortie fourni pour au moins un mot de bits précédent.

La présente invention prévoit également un circuit de normalisation d'un flux de bits fourni par une source de bruit, comportant :
un élément d'affectation d'un état 0 ou 1 en fonction des états respectifs de chaque mot de longueur identique de bits d'un flux initial ; et
un élément de détection de mots dont tous les bits ont des états identiques conditionnant une inversion des états fournis en sortie de l'élément d'affectation.

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
les figures 1 et 2 qui ont été décrites précédemment sont destinées à exposer l'état de la technique et le problème posé ; et
la figure 3 représente, de façon très schématique et sous forme de blocs, un mode de réalisation d'un circuit de normalisation selon l'invention.

Les mêmes éléments ont été désignés par les mêmes références aux différentes figures. Pour des raisons de clarté, seuls les éléments qui sont nécessaires à la compréhension de l'invention ont été représentés aux figures et seront décrits par la suite. En particulier, l'obtention du flux de bits à normaliser n'a pas été détaillée, l'invention pouvant être mise en oeuvre quel que soit ce flux et notamment qu'il ait été précédemment soumis ou non à d'autres traitements de normalisation. De même, la destination du flux de bits normalisé obtenu par l'invention est compatible avec toutes les utilisations classiques de flux de bits pour générateurs aléatoires et notamment pour une combinaison, par exemple par association en parallèle de plusieurs flux de bits, afin d'obtenir des mots aléatoires. Pour simplifier, l'invention sera décrite en relation avec un flux entrant traité par mots de deux bits consécutifs. Elle s'applique toutefois à des mots de longueur plus importante.

Une caractéristique de la présente invention est, dans une méthode de normalisation de type Von Neumann, d'inverser conditionnellement les états du flux de sortie. Selon l'invention, une telle inversion de ces états est provoquée par l'apparition de certains états de bits du flux d'origine.

La figure 3 représente, de façon très schématique et sous forme de blocs, un mode de réalisation d'un circuit de normalisation selon la présente invention.

Comme dans le cas classique de la figure 2, on mémorise (bloc 4, BUFF) au moins un bit du flux entrant BS, de façon à permettre un traitement des bits du flux par paires. Selon la manière dont sont traitées en pratique les paires de bits, on peut être conduit à mémoriser deux bits successifs du flux BS, voire plus.

Selon l'invention, un élément de détermination 15 d'état fournit un flux de bits de sortie normalisé NBS en fonction des états respectifs de la paire de bits courante. L'élément 15 reçoit un signal de configuration d'inversion (INV) d'un bloc 6 de détection de doublons dans le flux de bits BS. Selon le mode de réalisation choisi, et comme on le verra par la suite, plusieurs configurations peuvent conditionner l'inversion. Par convention arbitraire, on considère un état 1 comme actif et un état 0 comme inactif.

Une autre caractéristique de la présente invention est d'attribuer un état de sortie à l'apparition d'un doublon dans le flux entrant BS.

Contrairement à ce que l'on pensait, il est possible d'attribuer un état de sortie aux paires de bits identiques tout en gardant un flux équiprobable, grâce à l'inversion mentionnée ci-dessus qui évite d'attribuer toujours le même état de sortie à l'apparition d'un doublon d'un type (00 ou 11) donné.

Selon un premier mode de mise en oeuvre, l'état du bit INV est inversé chaque fois qu'apparaît une paire 00 ou 11, et l'élément de détermination 15 est prévu pour fournir les états suivants :
- pour une paire entrante 01 : 0 si le bit INV est inactif, 1 dans le cas contraire ;
- pour une paire 10 : 1 si le bit INV est inactif, 0 dans le cas contraire ;
- pour une paire 00 : 1 si le bit INV est actif, 0 dans le cas contraire ; et
- pour une paire 11 : 0 si le bit INV est actif, 1 dans le cas contraire.

Avec une telle réalisation et en supposant, par exemple, le bit INV à l'état inactif initialement, un flux de bits entrant BS 01100001101110 se traduit par un flux sortant normalisé NBS 0101001.

Pour simplifier, on a considéré que la décision quant à l'état du bit de sortie, à l'apparition d'un doublon, s'effectue avant le changement éventuel de l'état du bit INV. Le contraire est toutefois possible.

Selon un deuxième mode de mise en oeuvre de l'invention, on utilise deux bits INV0 et INV1 au sein du circuit 6. Ces bits sont respectivement affectés à l'apparition de paires 00 et de paires 11, et leurs états respectifs s'inversent à chaque apparition de la paire correspondante. L'obtention du bit INV correspond alors à une combinaison des deux bits INV0 et INV1. Par exemple, le bit INV est placé dans un état actif si les bits INV0 et INV1 sont dans des états opposés et dans un état inactif si ces deux bits sont dans le même état. Le schéma de décision de l'élément 15 n'est, dans cet exemple, pas modifié.

Selon cet exemple de mise en oeuvre et en supposant des bits INV0, INV1 et INV initialement inactifs (état 0) et une décision sur les doublons avant un changement éventuel de l'état du bit INV, un flux de bits BS 011000011011101111 se traduit par un flux de bits normalisé NBS 010100110.

En variante, le bit INV conditionne l'état des bits de sortie pour les paires 01 et 10, et les bits INV0 et INV1 conditionnent les états des bits de sortie pour les paires 00 et 11. L'élément 15 reçoit alors également les bits INV0 et INV1 fournis par l'élément 6.

Selon un troisième mode de mise en oeuvre de l'invention, on reprend les critères de l'élément de décision 5 des modes de mise en oeuvre précédents pour les paires 01 et 10. Par contre, à l'apparition d'une paire 00 ou 11, l'état du bit de sortie correspond à l'état du bit de sortie précédent ou à son inverse, selon que le bit d'inversion INV est ou non actif.

Selon ce troisième mode de mise en oeuvre et en supposant un élément 6 conforme au premier mode de mise en oeuvre, une séquence BS 011000011011101100 se transforme en une séquence NBS 010100100.

Selon un quatrième mode de mise en oeuvre de l'invention, on combine les deuxième et troisième modes de mise en oeuvre précédents pour affecter des bits d'inversion INV0 et INV1 dédiés à chaque type de paires identiques et on tient compte de l'état du bit de sortie précédent pour affecter un bit de sortie à une paire d'états identiques.

D'autres combinaisons des modes de mise en oeuvre décrits ci-dessus sont bien entendu possibles.

Un avantage de l'invention est que le débit du flux de bits normalisé ainsi obtenu est uniquement divisé par deux par rapport au flux d'origine.

Un autre avantage est que ce débit est constant.

Bien entendu, la présente invention est susceptible de diverses variantes et modifications qui apparaîtront à l'homme de l'art. En particulier, la mise en oeuvre pratique d'un circuit de normalisation selon l'invention, que ce soit sous forme matérielle ou logicielle, est à la portée de l'homme du métier à partir des indications fonctionnelles données ci-dessus et en utilisant des outils classiques.

De plus, bien que l'invention ait été décrite en relation avec l'exploitation de paires de bits, elle s'applique plus généralement quel que soit la longueur (paire ou impaire) des mots ou tronçons du flux entrant considérés. Par exemple, les bits entrants peuvent être traités quatre par quatre où la méthode de Von Neumann classique ne considère pas les mots de quatre bits d'états identiques (0000 et 1111). L'adaptation des modes de réalisation décrits à des mots de plus de deux bits est à la portée de l'homme du métier.

## Revendications

1. Procédé de normalisation d'une source de bruit fournissant un flux de bits initial, **caractérisé en ce qu'**il consiste :
à découper le flux de bits initial (BS) en mots de bits de longueur identique ; et
à attribuer un état de sortie en fonction des états des bits du mot courant et d'une règle d'attribution (15) préétablie, la règle d'attribution se trouvant inversée en fonction de l'apparition, dans le flux de bit initial (BS), de mots dont tous les bits ont des états identiques.

2. Procédé selon la revendication 1, dans lequel la règle d'attribution des bits en sortie est inversée à chaque apparition d'un mot de bits d'états identiques dans le flux initial (BS) .

3. Procédé selon la revendication 1 ou 2, dans lequel l'inversion des états fournis en sortie est conditionnée par une combinaison de bits détectant l'apparition de mots de bits d'états identiques de chaque type, respectivement.

4. Procédé selon la revendication 1, dans lequel le bit affecté à un mot de bits d'états identiques dans le flux initial (BS) dépend de l'état de sortie fourni pour au moins un mot de bits précédent.

5. Circuit de normalisation d'un flux de bits fourni par une source de bruit, **caractérisé en ce qu'**il comporte :
un élément (15) d'affectation d'un état 0 ou 1 en fonction des états respectifs de chaque mot de longueur identique d'un flux (BS) initial ; et
un élément (6) de détection de mots dont tous les bits ont des états identiques (00, 11) conditionnant une inversion des états fournis en sortie de l'élément d'affectation.

6. Circuit selon la revendication 5, pour la mise en oeuvre du procédé selon l'une quelconque des revendications 2 à 4.

## Claims

1. A method for standardizing a noise source providing an initial bit flow, **characterized in that** it comprises:
dividing the initial bit flow (BS) into bit words of identical lengths; and
assigning an output state according to the states of the bits of the current word and to a pre-established assignment rule, the assignment rule (15) being inverted according to the occurrence, in the initial bit flow (BS), of words, all the bits of which have identical states.

2. The method of claim 1, in which the output bit assignment rule is inverted upon each occurrence of a word of bits of identical states in the initial flow (BS).

3. The method of claim 1 or 2, in which the inversion of the output states is conditioned by a combination of bits detecting the occurrence of words of bits of identical states of each type, respectively.

4. The method of claim 1, in which the bit assigned to a word of bits of identical states in the initial flow (BS) depends on the output state provided for at least one preceding bit word.

5. A circuit for standardizing a bit flow provided by a noise source, **characterized in that** it comprises:
an element (15) for assigning a state 0 or 1 according to the respective states of each word of identical length of bits of an initial flow (BS); and
an element (6) for detecting words, all the bits of which have identical states (00, 11) conditioning an inversion of the states output by the assignment element.

6. The circuit of claim 5, for the implementation of the method of any of claims 2 to 4.

## Patentansprüche

1. Ein Verfahren zum Standardisieren einer Rauschquelle, die einen anfänglichen Bit Fluss bereitstellt, ist **dadurch gekennzeichnet, dass** sie Folgendes aufweist:
Teilen des anfänglichen Bit Flusses (BS) in Bit Wörter identischer Länge; und
Zuordnen eines Ausgangszustands gemäß den Zuständen der Bits des aktuellen Wortes und gemäß einer vorab erstellten Zuordnungsregel, wobei die Zuordnungsregel (15) invertiert wird, gemäß dem Auftreten von Wörtern in dem anfänglichen Bit Fluss (BS), deren gesamte Bits denselben Zustand haben.

2. Verfahren gemäß Anspruch 1, in dem die Ausgangs Bit Zuordnungsregel bei jedem Auftreten eines Wortes von Bits von identischen Zuständen in dem anfänglichen Fluss (BS) invertiert wird.

3. Verfahren gemäß Anspruch 1 oder 2, in dem die Inversion der Ausgangszustände durch eine Kombination von Bits bestimmt ist, die das Auftreten von Wörtern von Bits von identischen Zuständen eines jeden Typs entsprechend detektiert.

4. Verfahren gemäß Anspruch 1, in dem das Bit, das einem Wort von Bits von identischen Zuständen in dem anfänglichen Fluss (BS) zugeordnet ist, abhängt von dem Ausgangszustand, der für wenigstens ein vorhergehendes Bit Wort bereitgestellt wird.

5. Ein Schaltkreis zum Standardisieren eines Bit Flusses, der durch eine Rauschquelle bereitgestellt wird, ist **dadurch gekennzeichnet, dass** er Folgendes aufweist:
ein Element (15) zum Zuordnen eines Zustands 0 oder 1 entsprechend des jeweiligen Zustands von jedem Wort von identischer Länge von Bits eines anfänglichen Flusses (BS); und
ein Element (6) zum Detektieren von Wörtern, deren gesamte Bits identische Zustände (00, 11) aufweisen, welche eine Inversion der Zustände, die durch das Zuordnungselement ausgegeben wurden, bedingen.

6. Schaltkreis gemäß Anspruch 5 zum Implementieren des Verfahrens nach einem der Ansprüche 2 bis 4.
